# EUROPÄISCHE PATENTANMELDUNG

(11) **EP 1 970 828 A1**
(43) Veröffentlichungstag der Anmeldung: **17.09.2008**
(21) Anmeldenummer: 08101475.5
(22) Anmeldetag: 11.02.2008
(51) Int. Cl.: G06F 21/00

(54) **Vorrichtung zur Erfassung und Übertragung biometrischer Daten sowie elektronische Einrichtung**

(30) Priorität: 12.02.2007 DE 102007006851
(71) Anmelder: Vodafone Holding GmbH, 40213 Düsseldorf (DE)
(72) Erfinder: Reiss, Christoph, 61440, Oberursel (DE)
(74) Vertreter: Müller, Thomas

(57) **Zusammenfassung**

Die vorliegende Erfindung betrifft eine Vorrichtung (10) zur Erfassung und Übertragung biometrischer Daten zum Zwecke der Authentifizierung für die Benutzung eines elektronischen Geräts, mit einer Scannereinrichtung (11) zum Erfassen der biometrischen Daten, und mit einer Einrichtung (12) zur Nahbereichskommunikation, die eine Schnittstelle (13) zu der Scannereinrichtung (11) und eine Schnittstelle (14) zu einem elektronischen Gerät aufweist. Die erzeugten biometrischen Daten werden im Wege der Nahbereichskommunikation zu dem elektronischen Gerät übertragen, wo sie zum Zwecke der Authentifizierung genutzt werden können.

## Beschreibung

Die vorliegende Erfindung betrifft zunächst eine Vorrichtung zur Erfassung und Übertragung biometrischer Daten zum Zwecke der Authentifizierung für die Benutzung eines elektronischen Geräts. Weiterhin betrifft die vorliegende Erfindung eine elektronische Einrichtung, aufweisend ein elektronisches Gerät, welches eine Einrichtung zum Authentifizieren eines Nutzers und eine Einrichtung zur Nahbereichskommunikation aufweist.

Es sind bereits unterschiedlichste Möglichkeiten bekannt geworden, wie sich ein Nutzer authentifizieren kann, um ein elektronisches Gerät benutzen zu können. Beispielsweise ist es bekannt, dass der Nutzer eine mehrstellige PIN-Nummer eingibt, die in einer Authentifizierungseinrichtung des elektronischen Geräts geprüft wird. Ist die eingegebene PIN-Nummer korrekt, wird dem Nutzer die Benutzung des elektronischen Geräts freigegeben.

In der GB 2 408 129 A ist eine Möglichkeit beschrieben, eine Authentifizierung mittels Nahbereichskommunikation, beispielsweise mittels Bluetooth, vorzunehmen. Dabei erfolgt die Nahbereichskommunikation zwischen einem ersten elektronischen Gerät, beispielsweise einem Computer, und einem zweiten elektronischen Gerät, beispielsweise einem Mobiltelefon. Zur Anmeldung eines Nutzers an dem Computer sendet der Computer mittels der Nahbereichskommunikation eine entsprechende Anfrage an das Mobiltelefon. Dieses stellt die erforderlichen Authentifizierungsdaten bereit, die anschließend per Nahbereichskommunikation an den Computer übermittelt werden.

Bei den bekannten Lösungen besteht häufig das Problem, dass sich der Nutzer über die Eingabe einer PIN-Nummer authentifizieren muss. Dies erfolgt in der Regel über einen mehrstelligen PIN-Code, der über eine Eingabeeinrichtung, beispielsweise eine Tastatur, eingegeben werden muss. Aufgrund der Vielzahl der heutzutage für unterschiedlichste Anwendungen benötigten PIN-Codes ist die Gefahr groß, dass der für eine bestimmte Authentifizierung erforderliche PIN-Code vom Nutzer vergessen wird. Ein weiterer Nachteil besteht bei dieser Art der Authentifizierung darin, dass bei mehrmaliger falscher Eingabe des PIN-Codes das elektronische Gerät in der Regel gesperrt und umständlich wieder entsperrt werden muss. Weiterhin nicht zu unterschätzen ist auch die Möglichkeit einer Ausspähung des PIN-Codes, oder aber der Missbrauch eines aufgefundenen, vorher schon frei geschalteten Geräts.

Zur Vermeidung dieses Problems ist in der DE 201 09 551 U1 beispielsweise eine Lösung beschrieben, bei der sich ein Nutzer zur Nutzung eines mobilen Endgeräts, beispielsweise eines Mobiltelefons, bei diesem ohne die Erfordernis, einen PIN-Code eingeben zu müssen, authentifizieren kann. Bei dieser bekannten Lösung ist in dem Endgerät ein Scanner zur Erfassung biometrischer Daten, insbesondere zur Erfassung eines Fingerabdrucks, integriert. Nachteilig bei dieser bekannten Lösung ist, dass alle Endgeräte mit einem solchen Scanner ausgerüstet sein müssen, so dass diese groß und teuer sind.

Aufgabe der vorliegenden Erfindung ist es, eine Lösung zu schaffen, die die wahlweise Nachrüstung eines elektronischen Geräts mit einer Einrichtung zur Authentifizierung mittels biometrischer Daten ermöglicht.

Diese Aufgabe wird erfindungsgemäß gelöst durch die Vorrichtung zur Erfassung und Übertragung biometrischer Daten mit den Merkmalen gemäß dem unabhängigen Patentanspruch 1 sowie die Elektronische Einrichtung mit den Merkmalen gemäß dem unabhängigen Patentanspruch 6. Weitere Merkmale und Details der Erfindung ergeben sich aus den Unteransprüchen, der Beschreibung sowie der Zeichnung. Merkmale und Details, die im Zusammenhang mit der erfindungsgemäßen Vorrichtung beschrieben sind, gelten dabei selbstverständlich auch im Zusammenhang mit der erfindungsgemäßen elektronischen Einrichtung, und umgekehrt.

Gemäß dem ersten Aspekt der Erfindung wird eine Vorrichtung zur Erfassung und Übertragung biometrischer Daten zum Zwecke der Authentifizierung für die Benutzung eines elektronischen Geräts bereitgestellt, mit einer Scannereinrichtung zum Erfassen der biometrischen Daten, und mit einer Einrichtung zur Nahbereichskommunikation, die eine Schnittstelle zu der Scannereinrichtung und eine Schnittstelle zu einem elektronischen Gerät aufweist.

Mittels der Scannereinrichtung werden zunächst die erforderlichen biometrischen Daten erfasst. Dabei ist die Erfindung nicht auf bestimmte Typen von Scannern oder aber die Erfassung bestimmter biometrischer Daten beschränkt. Einige nicht ausschließliche Beispiele hierzu werden im weiteren Verlauf der Beschreibung näher erläutert. Die Vorrichtung ist weiterhin mit einer Einrichtung zur Nahbereichskommunikation ausgerüstet. Auch diesbezüglich ist die Erfindung nicht auf bestimmte Ausgestaltungsformen dieser Einrichtung beschränkt. Die Definition des Begriffs "Nahbereichskommunikation" sowie einige nicht ausschließliche Beispiele hierzu sind im weiteren Verlauf der Beschreibung näher erläutert. Über eine geeignete Schnittstelle werden die erfassten biometrischen Daten zunächst von der Scannereinrichtung zur Einrichtung zur Nahbereichskommunikation übertragen. Von dort werden die Daten dann über eine weitere Schnittstelle zu dem elektronischen Gerät übertragen.

Vorteilhaft kann die Scannereinrichtung als Flachscanner, insbesondere als Folienscanner ausgebildet sein. In einem solchen Fall können die Bestandteile der Vorrichtung zur Erfassung und Übertragung biometrischer Daten auf einem flachen Substrat, beispielsweise einer Folie, aufgebracht, oder aber in dieser integriert sein.

Vorzugsweise kann die Vorrichtung Mittel zur Befestigung an dem elektronischen Gerät aufweisen. Beispielsweise kann vorgesehen sein, dass die Vorrichtung an dem elektronischen Gerät angeklebt oder aufgeklebt wird. Dies ist insbesondere dann vorteilhaft realisierbar, wenn die Scannereinrichtung als Folienscanner ausgebildet ist. In diesem Fall kann die Vorrichtung einfach auf das elektronische Gerät, beispielsweise auf dessen Rückwand, oder aber auch natürlich an jeder anderen Stelle des Gehäuses, aufgeklebt werden. Dies ermöglicht insbesondere auch eine einfache, kostengünstige Nachrüstung der elektronischen Geräte. Natürlich sind auch andere Arten von Befestigungen möglich, beispielsweise das Aufstecken, das Einrasten in dafür vorgesehene Aufnahmen, und dergleichen.

Wie weiter oben beschrieben wurde, ist die Erfindung nicht auf die Erfassung bestimmter Typen von biometrischen Daten beschränkt. Besonders vorteilhaft ist es, wenn die Scannereinrichtung als Fingerabdruckscanner ausgebildet ist. Natürlich sind auch Scannereinrichtungen denkbar, die andere Arten von biometrischen Daten erfassen.

Die Einrichtung zur Nahbereichskommunikation kann auf verschiedene Weisen ausgebildet sein, so dass die Erfindung nicht auf bestimmte Ausgestaltungsformen beschränkt ist. Bei der Nahbereichskommunikation handelt es sich generell um eine drahtlose Kommunikationstechnologie für Datenverbindungen über kurze Strecken, das heißt zur ortsnahen Kommunikation. Zwei mit entsprechenden Einrichtungen zur Nahbereichskommunikation ausgerüstete Einrichtungen werden kurz aneinander gehalten und identifizieren sich über die Einrichtung zur Nahbereichskommunikation. Nach erfolgreicher Identifizierung kann ein Datenaustausch stattfinden.

Die Abstände für eine solche ortsnahe Kommunikation bewegen sich vorteilhaft im Bereich von einigen Zentimetern bis zu einigen Metern, vorteilhaft in einem Bereich zwischen 1 Zentimeter und einem Meter, bevorzugt in einem Bereich zwischen 2 und 20 Zentimetern, ganz besonders bevorzugt in einem Bereich zwischen 3 und 6 Zentimetern. Natürlich ist die Erfindung nicht auf bestimmte Abstände beschränkt.

Diese ergeben sich vielmehr aus dem Einsatzgebiet, auf dem eine Nahbereichskommunikation stattfinden soll.

Vorteilhaft kann die Einrichtung zur Nahbereichskommunikation als so genannte NFC-Einrichtung (Nearfield Communication), als RFID-Einrichtung (Radio Frequency Identification), oder dergleichen ausgebildet sein.

RFID ist ein Verfahren, mittels dessen Daten berührungslos übertragen, gelesen und gespeichert werden können. Die Daten werden auf einem RFID-Chip gespeichert. Das Auslesen beziehungsweise Beschreiben des Speichers erfolgt über Radiowellen. Die Entfernung, über die ein solcher RFID-Chip ausgelesen werden kann, hängt von dessen Ausführung, dem benutzen Frequenzband, der Sendestärke, von Umwelteinflüssen und dergleichen ab.

Vorzugsweise weist die wenigstens eine Einrichtung zur Nahbereichskommunikation, beispielsweise das RFID-Element, einen Transponder zum Senden und/oder Empfangen von Daten auf. Ein Transponder besteht generell aus einer Prozessoreinheit und einer Antenne. Optional kann dieser auch über eine eigene Energiequelle verfügen. In diesem Fall spricht man von einem aktiven Transponder. Ein Transponder ohne eigene Energiequelle wird als passiver Transponder bezeichnet.

Aktive Transponder befinden sich üblicherweise in einer Ruhestellung, in der sie keine Signale aussenden. Erst wenn sie ein bestimmtes Aktivierungssignal empfangen, aktiviert sich deren Sender. Aktive Transponder besitzen im Vergleich zu passiven Transpondern eine größere Sendereichweite.

Passive Transponder verfügen über keine eigene Energiequelle. Sie beziehen ihre Energie zur Übertragung von Informationen aus den empfangenen Funkwellen. Passive Transponder verfügen im Vergleich zu den aktiven Transpondern über eine geringere Reichweite.

Bevorzugt ist der Transponder im vorliegenden Fall als passiver Transponder ausgebildet. Aufgrund der geringen Reichweite ist nämlich auch ein Schutz vor unberechtigten Zugriffen beziehungsweise Abgriffen gewährleistet.

Besonders bevorzugt ist eine Vorrichtung zur Erfassung und Übertragung biometrischer Daten, bei der die Scannereinrichtung als Folienscanner ausgebildet ist. Die Vorrichtung kann beispielsweise auf das elektronische Gerät, etwa auf dessen Rückseite, aufgebracht werden. Mit einer korrespondierenden Einrichtung zur Nahbereichskommunikation im elektronischen Gerät kann dann die Einrichtung zur Nahbereichskommunikation in der Vorrichtung kommunizieren, und dabei vorteilhaft ein Datenaustausch, aber eben auch eine Stromversorgung, zwischen Vorrichtung und elektronischem Gerät realisiert werden.

Auf diese Weise können bereits existierende elektronische Geräte, die über eine derartige Scannereinrichtung bisher noch nicht verfügen, bei den entsprechenden Systemvoraussetzungen auf einfache, problemlose und kostengünstige Weise mit einer solchen Scannereinrichtung nachgerüstet werden. Weiterhin zeichnet sich die Scannereinrichtung beziehungsweise die gesamte Vorrichtung durch einen geringen Stromverbrauch aus.

Gemäß einem zweiten Aspekt der Erfindung wird eine Elektronische Einrichtung bereitgestellt, aufweisend ein elektronisches Gerät, welches eine Einrichtung zum Authentifizieren eines Nutzers und eine Einrichtung zur Nahbereichskommunikation aufweist. Die elektronische Einrichtung ist dadurch gekennzeichnet, dass die elektronische Einrichtung eine wie vorstehend beschriebene erfindungsgemäße Vorrichtung zur Erfassung und Übertragung biometrischer Daten aufweist, und dass die Einrichtung zur Nahbereichskommunikation des elektronischen Geräts eine Schnittstelle zu der Vorrichtung zur Erfassung und Übertragung biometrischer Daten aufweist.

Die elektronische Einrichtung zeichnet sich dadurch aus, dass auch im elektronischen Gerät eine Einrichtung zur Nahbereichskommunikation vorgesehen ist, die über eine geeignete Schnittstelle mit der Einrichtung zur Nahbereichskommunikation in der Vorrichtung zum Erfassen und Übertragen biometrischer Daten in Verbindung gebracht werden kann. Die im elektronischen Gerät vorgesehene Einrichtung zur Nahbereichskommunikation steht weiterhin über eine Schnittstele mit einer Authentifizierungseinrichtung in Verbindung. Wenn nun der Nutzer über die Scannereinrichtung biometrische Daten erzeugt hat, werden diese mittels der beiden Einrichtungen zur Nahbereichskommunikation zum elektronischen Gerät übertragen, und mit dem Nutzer zugeordneten Authentifizierungsdaten verglichen. Wenn eine Übereinstimmung festgestellt wird, wird das elektronische Gerät für den Nutzer freigegeben.

Beispielsweise kann vorgesehen sein, dass die Vorrichtung zur Erzeugung und Übertragung biometrischer Daten als separates Gerät ausgebildet ist, dass in Kombination mit dem elektronischen Gerät eingesetzt wird. Elektronisches Gerät und Vorrichtung bilden dann in ihrer Gesamtheit die elektronische Einrichtung. Vorteilhaft kann aber auch vorgesehen sein, dass die Vorrichtung zur Erfassung und Übertragung biometrischer Daten an dem elektronischen Gerät befestigt ist. Wie dies im Einzelnen geschehen kann, ist weiter oben im Zusammenhang mit der erfindungsgemäßen Vorrichtung in größerem Detail beschrieben.

Vorteilhaft kann die Einrichtung zur Nahbereichskommunikation des elektronischen Geräts als NFC-Einrichtung (Nearfield Communication), als RFID-Einrichtung (Radio Frequency Identification), oder dergleichen ausgebildet sein. Diesbezüglich wird ebenfalls auf die Ausführungen im Zusammenhang mit der erfindungsgemäßen Vorrichtung verwiesen und vollinhaltlich Bezug genommen.

Vorteilhaft kann das elektronische Gerät eine Speichereinheit aufweisen, in welcher Authentifizierungsdaten abgespeichert sind, wobei die Einrichtung zum Authentifizieren eines Nutzers eine Vergleichseinrichtung zum Vergleichen der übertragenen biometrischen Daten mit den Authentifizierungsdaten aufweist. In weiterer Ausgestaltung kann alternativ oder zusätzlich vorgesehen sein, dass die Einrichtung zum Authentifizieren eines Nutzers des elektronischen Geräts eine Schnittstelle zu einer externen Authentifizierungs-Rechnereinheit aufweist.

Vorteilhaft können die Einrichtung zum Authentifizieren eines Nutzers und/oder die Einrichtung zur Nahbereichskommunikation des elektronischen Geräts zumindest teilweise in einer Chipkarte, insbesondere in einer SIM-Karte oder USIM-Karte, vorgesehen sein. Besonders vorteilhaft können die Einrichtungen komplett in der Chipkarte vorgesehen sein. Es ist jedoch ebenso möglich, dass die Einrichtungen nur zum Teil in der Chipkarte vorgesehen sind.

Die vorliegende Erfindung ist nicht auf bestimmte Typen von elektronischen Geräten beschränkt. Beispielsweise, jedoch nicht ausschließlich, kann das elektronische Gerät ein Mobiltelefon, ein Personal Digital Assistant (PDA) oder ein tragbarer Computer sein.

Nachfolgend werden einige bevorzugte Ausführungsformen der vorliegenden Erfindung beschreiben, bei denen das elektronische Gerät als Mobiltelefon ausgebildet sein soll.

Ein sehr flacher Folienscanner wird vorteilhaft von hinten (!) auf das Mobiltelefon aufgeklebt. Der Folienscanner ist vorteilhaft mit einer Einrichtung zur Nahbereichskommunikation, etwa einem NFC Chip, ausgestattet. Dadurch wird die Übertragung der gescannten Daten in das Mobiltelefon zu der internen Einrichtung zur Nahbereichskommunikation, beispielsweise ebenfalls einem NFC-Chip (also back to back) und die Stromversorgung realisiert. Vorteilhaft kann eine Übertragung in eine SIM-Karte erfolgen.

Vom Mobiltelefon geht die Freigabe (Scan-Daten) per Nahbereichskommunikation, etwa NFC, beispielsweise an ein POS Gerät, oder möglicherweise über das Telekommunikationsnetz, etwa über das GSM Netz, an einen Rechner zur Freigabe eines Zugriffes oder Zutritt zu einem VPN.

Das Mobiltelefon hat vorteilhaft, beispielsweise auf der Rückseite oder aber an einer der Seiten, einen folienflachen Fingerabdruckscanner, der über Nahbereichskommunikation mit dem Mobiltelefon verbunden ist. Dadurch wird eine einfache Sicherung und Entsperrung des Mobiltelefons ermöglicht. Zusätzlich können die Mobiltelefone auf einfache Weise mit einem solchen Scanner nachgerüstet werden.

Beispielsweise kann im Formfaktor einer halbierten Smartcard (eventuell etwas länger) ein foliendicker Fingerscanner mit einem NFC Interface (sehr flacher Chip) ausgestattet werden. Per NFC wird dann der Scanner mit der SIM Karte des Mobiltelefons verbunden. Auf der SIM Karte ist die Software implementiert, die das Signal entschlüsselt und mit dem Geheimnis vergleicht. Danach wird der Betreib des Mobiltelefons und die Einbuchung ins Mobilnetz freigegeben.

Je kleiner und einfacher der Scanner und der NFC Chip werden, umso einfacher ist die Integration in bestehende und neue Endgeräte. Die erfindungsgemäße Lösung stellt somit eine kostengünstige Erweiterung oder Substitution der Sicherung durch einen PIN-Code dar.

Die Erfindung wird nun anhand eines Ausführungsbeispiels unter Bezugnahme auf die beiliegenden Zeichnungen näher erläutert. Es zeigen
- Figur 1: eine schematische Darstellung einer erfindungsgemäßen Vorrichtung zum Erzeugen und Übertragen biometrischer Daten; und
- Figur 2: in schematischer Darstellung ein elektronisches Gerät mit einer solchen Vorrichtung.

Die vorliegende Erfindung betrifft die Vereinfachung und Beschleunigung des Authentifizierungsprozesses zwischen Nutzer und Endgerät.

Ziel ist es, eine höhere Sicherheit und Akzeptanz durch die Nutzung einer Art Signatur zu erreichen und das bei sehr geringen zusätzlichen Kosten und optional.

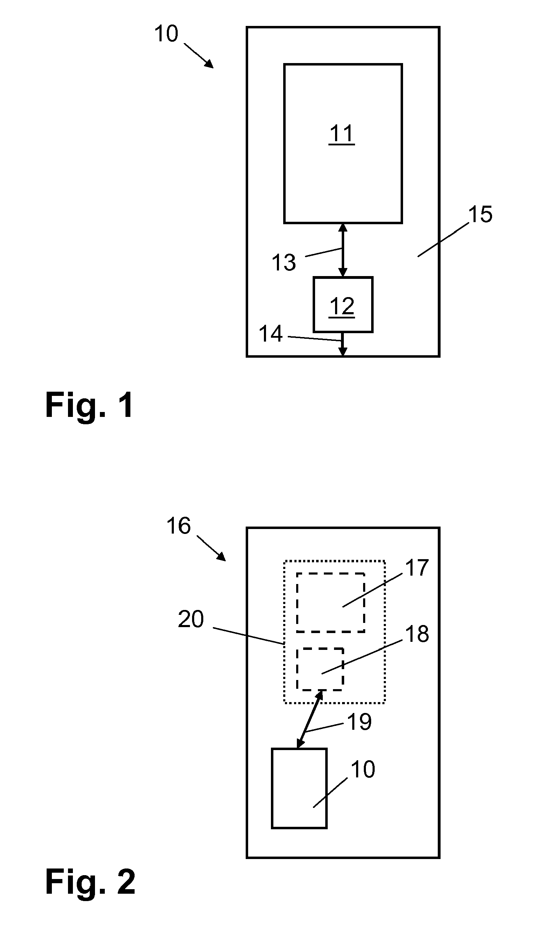

Dies kann vorteilhaft den Einsatz einer in Figur 1 dargestellten Vorrichtung 10 zur Erfassung und Übertragung biometrischer Daten aufweisen. Die Vorrichtung verfügt zunächst über eine Scannereinrichtung 11 zur Erfassung biometrischer Daten. Im vorliegenden Beispiel ist die Scannereinrichtung11 als flacher Scanner in Form eines Fingerabdruckscanners ausgebildet. Weiterhin verfügt die Vorrichtung 10 über eine Einrichtung 12 zur Nahbereichskommunikation, etwa eine NFC-Einrichtung, eine RFID-Einrichtung oder dergleichen. Über eine durch einen Pfeil dargestellte Schnittstelle 13 stehen die beiden in Verbindung, Zusätzlich verfügt die Einrichtung 12 zur Nahbereichskommunikation noch über eine Schnittstelle 14 (dargestellt durch einen Pfeil) zu einem externen elektronischen Gerät. Auf diese Weise können die von der Scannereinrichtung 11 erfassten biometrischen Daten zum elektronischen Gerät übertragen werden. Vorteilhaft ist die Vorrichtung 10 foliendünn ausgebildet. Dazu sind die einzelnen Bauelemente der Vorrichtung auf einem Foliensubstrat 15 aufgebracht, oder aber in diesem integriert. Das Foliensubstrat kann vorteilhaft an einer Seite mit einer Klebeschicht versehen sein, so dass die gesamte Vorrichtung 10 auf einfache Weise auf einem elektronischen Gerät aufgeklebt werden kann.

In Figur 2 ist ein elektronisches Gerät 16 in Form eines Mobiltelefons dargestellt. Auf dessen Rückseite soll eine wie in Figur 1 beschriebene Vorrichtung 10 aufgeklebt sein. Das elektronische Gerät 16 verfügt unter anderem über eine Einrichtung 17 zum Authentifizieren eines Nutzers sowie über eine Einrichtung 18 zur Nahbereichskommunikation. Diese beiden Bauelemente sind im vorliegenden Fall auf einem einzigen Chip 20, beispielsweise einer SIM-Karte oder USIM-Karte, implementiert. Dies muss aber nicht ausschließlich so sein. Es können wenigstens übergangsweise diese beiden Bauelemente auch separat, aber miteinander verbunden, im elektronischen Gerät installiert sein. Um eine Verbindung herstellen zu können verfügt die Einrichtung 18 zur Nahbereichskommunikation über eine durch einen Pfeil dargestellte Schnittstelle 19 zu der Vorrichtung 10 zum Erzeugen und Übertragen der biometrischen Daten.

Nachfolgend wird nun die Funktionsweise näher erläutert. Der Besitzer eines Mobilgeräts 16 nimmt das Gerät zur Hand und berührt dabei und gleichzeitig den entsprechend angebrachten Scanner 11 mit einem Finger. Dabei wird der Fingerabdruck abgegriffen und in das Gerät 16 per Nahbereichskommunikationssignal, etwa ein NFC- oder RFID-Signal (über die Einrichtungen 12, 18 zur Nahbereichskommunikation und die Schnittstellen 13, 14 und 19) übertragen. Im Gerät 16 wird der eingebrachte Fingerabdruck mit dem abgespeicherten oder über die Luftschnittstelle geholten Speicherinhalt (Fingerabdruck) verglichen und beurteilt. Dies geschieht mit Hilfe der Authentifizierungseinrichtung 17. Gegebenfalls wird die Freigabe des Gerätes 16 (und / oder eines Vorganges) erteilt.

Das Besondere ist, dass die Vorrichtung 10 Foliendicke aufweist und den Scanner 11 sowie dazu auch noch den Nahbereichskommunikations-Chip 12 enthält. Der erforderliche Strom für die Erfassung und die Übertragung ins Innere des Gerätes 16 wird durch das Nahbereichskommunikation-Interface 19 bereitgestellt. Das bedeutet, dass durch das Nahbereichskummunikations-Interface 19 im Mobilgerät 16 die erforderliche Energie per Induktion (eben über die Nahbereichskommunikation) an den Scanner 11 übertragen wird.

Die foliendicke Vorrichtung 10 kann immer nachgerüstet werden. Die zukünftigen Mobil-Geräte 16 werden zunehmend Zweiwege - Nahbereichskommunikations-Interfaces enthalten.

## Patentansprüche

1. Vorrichtung (10) zur Erfassung und Übertragung biometrischer Daten zum Zwecke der Authentifizierung für die Benutzung eines elektronischen Geräts, mit einer Scannereinrichtung (11) zum Erfassen der biometrischen Daten, und mit einer Einrichtung (12) zur Nahbereichskommunikation, die eine Schnittstelle (13) zu der Scannereinrichtung (11) und eine Schnittstelle (14) zu einem elektronischen Gerät aufweist.

2. Vorrichtung nach Anspruch 1, **dadurch gekennzeichnet, dass** die Scannereinrichtung (11) als Flachscanner, insbesondere als Folienscanner ausgebildet ist.

3. Vorrichtung nach Anspruch 1 oder 2, **dadurch gekennzeichnet, dass** die Vorrichtung (10) Mittel zur Befestigung an dem elektronischen Gerät aufweist.

4. Vorrichtung nach einem der Ansprüche 1 bis 3, **dadurch gekennzeichnet, dass** die Scannereinrichtung (11) als Fingerabdruckscanner ausgebildet ist.

5. Vorrichtung nach einem der Ansprüche 1 bis 4, **dadurch gekennzeichnet, dass** die Einrichtung (12) zur Nahbereichskommunikation als NFC-Einrichtung (Nearfield Communication) oder als RFID-Einrichtung (Radio Frequency Identification), ausgebildet ist.

6. Elektronische Einrichtung, aufweisend ein elektronisches Gerät (16), welches eine Einrichtung (17) zum Authentifizieren eines Nutzers und eine Einrichtung (18) zur Nahbereichskommunikation aufweist, **dadurch gekennzeichnet, dass** die elektronische Einrichtung eine Vorrichtung (10) zur Erfassung und Übertragung biometrischer Daten nach einem der Ansprüche 1 bis 5 aufweist, und dass die Einrichtung (18) zur Nahbereichskommunikation des elektronischen Geräts (16) eine Schnittstelle (19) zu der Vorrichtung (10) zur Erfassung und Übertragung biometrischer Daten aufweist.

7. Elektronische Einrichtung nach Anspruch 6, **dadurch gekennzeichnet, dass** die Vorrichtung (10) zur Erfassung und Übertragung biometrischer Daten an dem elektronischen Gerät (16) befestigt ist.

8. Elektronische Einrichtung nach Anspruch 6 oder 7, **dadurch gekennzeichnet, dass** die Einrichtung (18) zur Nahbereichskommunikation des elektronischen Geräts (16) als NFC-Einrichtung (Nearfield Communication) oder als RFID-Einrichtung (Radio Frequency Identification), ausgebildet ist.

9. Elektronische Einrichtung nach einem der Ansprüche 6 bis 8, **dadurch gekennzeichnet, dass** das elektronische Gerät (16) eine Speichereinheit aufweist, in welcher Authentifizierungsdaten abgespeichert sind, und dass die Einrichtung (17) zum Authentifizieren eines Nutzers eine Vergleichseinrichtung zum Vergleichen der übertragenen biometrischen Daten mit den Authentifizierungsdaten aufweist.

10. Elektronische Einrichtung nach einem der Ansprüche 6 bis 9, **dadurch gekennzeichnet, dass** die Einrichtung (17) zum Authentifizieren eines Nutzers des elektronischen Geräts eine Schnittstelle zu einer externen Authentifizierungs-Rechnereinheit aufweist.

11. Elektronische Einrichtung nach einem der Ansprüche 6 bis 10, **dadurch gekennzeichnet, dass** die Einrichtung (17) zum Authentifizieren eines Nutzers und/oder die Einrichtung (18) zur Nahbereichskommunikation des elektronischen Geräts zumindest teilweise in einer Chipkarte (20), insbesondere in einer SIM-Karte oder USIM-Karte, vorgesehen sind.

12. Elektronische Einrichtung nach einem der Ansprüche 6 bis 11, **dadurch gekennzeichnet, dass** das elektronische Gerät (16) ein Mobiltelefon, ein Personal Digital Assistant (PDA) oder ein tragbarer Computer ist.
